# EUROPÄISCHE PATENTSCHRIFT

(11) **EP 3 529 136 B1**
(45) Veröffentlichungstag und Bekanntmachung des Hinweises auf die Patenterteilung: **23.02.2022**
(21) Anmeldenummer: 17758871.2
(22) Anmeldetag: 31.08.2017
(51) Int. Cl.: B62J 9/23, B62J 9/27

(54) **DREHBARE VERBINDUNGSANORDNUNG FÜR TOPCASE**
ROTATABLE CONNECTING DEVCE FOR TOPCASE
DISPOSITIF DE CONNEXION ROTATIF POUR TOP CASE

(30) Priorität: 18.10.2016 DE 102016220296
(43) Veröffentlichungstag der Anmeldung: 28.08.2019
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2017/071836
(87) Internationale Veröffentlichungsnummer: WO 2018/072919

(56) Entgegenhaltungen:
- DE-A1-102013 223 317
- DE-A1-102014 223 048
- DE-C- 950 350
- JP-A- 2014 213 733
- US-A- 4 085 961

## Beschreibung

Die Erfindung betrifft eine Verbindungsanordnung zur Befestigung eines Topcase an einem Motorrad oder an einem motorradähnlichen Fahrzeug, gemäß dem Oberbegriff des Patentanspruchs 1, sowie ein entsprechend ausgestattetes Motorrad oder ein motorradähnliches Fahrzeug.

Sogenannte "Topcases" sind aus dem Stand der Technik bekannt und stellen kofferähnliche Gepäckbehältnisse dar, die üblicherweise im Heckbereich eines Motorrades auf einen fest mit einem Fahrzeugrahmen verbundenen Gepäckträger aufgesetzt und an diesem befestigt werden. Vergleichbare Anordnungen sind unter anderem auch für motorradähnliche Fahrzeuge, wie Motorroller beziehungsweise Scooter, insbesondere zweirädrige, dreirädrige oder vierrädrige Scooter, sowie für Quads oder Trikes einsetzbar.

Es hat sich gezeigt, dass Topcases, insbesondere in einem mit Gepäck beladenen Zustand, eine Pendelneigung des Motorrades begünstigen beziehungsweise verstärken können. Es werden üblicherweise fahrzeugseitig große Anstrengungen unternommen, um eine derartige Pendelneigung zu reduzieren, beispielsweise durch aufwendige Anpassungen des Fahrwerks oder durch aufwendige Gepäckträgersysteme. Zur Reduktion der Pendelneigung umfassen Letztere beispielsweise eine "schwimmend" auf dem Unterbau des Gepäckträgers gelagerte Verbindungsplatte, auf der das Topcase bei Bedarf angeordnet werden kann.

Mit Hilfe der schwimmenden Lagerung wird eine Bewegungsentkopplung erzielt, die eine Übertragung von auf das Fahrzeug wirkenden Lastwechseln auf das Topcase reduziert. Hierzu ist die Verbindungsplatte meist in der Seitenrichtung des Fahrzeuges relativ zu dem Unterbau des Gepäckträgers bewegbar ausgestaltet, so dass das gesamte Topcase in dieser Richtung bewegbar ist.

Es hat sich jedoch gezeigt, dass die durch die schwimmende Lagerung bedingte, seitliche Beweglichkeit der Verbindungsplatte gegenüber dem Gesamtfahrzeug eine konstruktive Herausforderung darstellt, insbesondere hinsichtlich einer Abstimmung zwischen der beabsichtigten schwingungsdämpfenden Wirkung und einer ausreichenden Festigkeit für eine stabile und belastbare Verbindung. Da das Topcase meist unmittelbar hinter einem Sozius positioniert ist, besteht außerdem die Möglichkeit, dass der Sozius durch Körperkontakt mit dem Topcase die seitliche Beweglichkeit blockiert oder zumindest reduziert, oder aber die seitliche Bewegung des Topcase für den Sozius in unangenehmer Weise spürbar wird.

Weitere drehbare Gepäcksysteme für Motorräder sind beispielsweise aus der DE 10 2014 223 048 A1, welche die Merkmale des Oberbegriffs zeigt, und der DE 950 350 C bekannt.

Eine Aufgabe der Erfindung ist es daher, ein Fahrzeug mit Topcase bereitzustellen, welches die genannten Nachteile zumindest reduziert.

Diese Aufgabe wird gelöst mit einer Verbindungsanordnung zur Befestigung

eines Topcase an einem Motorrad oder motorradähnlichen Fahrzeug mit den Merkmalen des Patentanspruchs 1 sowie einem Motorrad oder motorradähnlichen Fahrzeug gemäß Patentanspruch 6. Vorteilhafte Ausführungsformen ergeben sich aus den jeweils abhängigen Patentansprüchen.

Demnach wird eine Verbindungsanordnung zur Befestigung eines Topcase an einem Motorrad oder einem motorradähnlichen Fahrzeug, bereitgestellt, mit:
- einem ersten Verbindungsabschnitt, der zum Verbinden mit dem Motorrad oder motorradähnlichen Fahrzeug ausgebildet ist, und
- einem zweiten Verbindungsabschnitt, der zum Verbinden mit einer Unterseite des Topcase ausgebildet ist.

Außerdem sind der erste und der zweite Verbindungsabschnitt um eine definierte Drehachse drehbeweglich miteinander verbunden, wobei die Verbindungsanordnung ein Drehgelenk zum Bereitstellen der drehbeweglichen Verbindung umfasst und das Drehgelenk die Drehachse definiert und einerseits mit dem ersten Verbindungsabschnitt und andererseits mit dem zweiten Verbindungsabschnitt verbunden ist, und wobei die Verbindungsanordnung des Weiteren mindestens einen Führungsfortsatz umfasst, welcher jeweils in oder an einem Führungsabschnitt zur Führung der Drehbewegung geführt wird.

Die Verbindungsanordnung ist also zwischen dem Topcase und dem Kraftfahrzeug angeordnet und stellt somit die Verbindung zwischen beiden her. Die Verbindung des ersten Verbindungsabschnitts mit dem Motorrad oder motorradähnlichen Fahrzeug und/oder die Verbindung des zweiten Verbindungsabschnitts mit dem Topcase können unabhängig voneinander ausgebildet sein, beispielsweise jeweils als formschlüssige, kraftschlüssige und/oder stoffschlüssige Verbindung.

Die drehbewegliche Verbindung des ersten Verbindungsabschnitts mit dem zweiten Verbindungsabschnitt ermöglicht eine Drehbewegung des zweiten Verbindungsabschnitts relativ zu dem ersten Verbindungsabschnitt und somit (im verbauten Zustand) relativ zu dem gesamten Motorrad oder motorradähnlichen Fahrzeug.

Ein Bewegungsumfang kann beispielsweise eine Drehung um einen maximalen Winkel zwischen +10° und -10°, vorzugsweise zwischen +5° und -5°, umfassen. Dies bedeutet, dass der mit dem Topcase verbindbare, zweite Verbindungsabschnitt aus einer Neutralposition maximal um einen Winkel von bis zu +10° oder um bis zu -10° (vorzugsweise maximal +5° und -5°) gedreht werden kann

Wie beschrieben, umfasst die Verbindungsanordnung ein Drehgelenk zum Bereitstellen der drehbeweglichen Verbindung. Hierbei definiert das Drehgelenk die Drehachse und ist einerseits mit dem ersten Verbindungsabschnitt und andererseits mit dem zweiten Verbindungsabschnitt verbunden.

Gemäß einer Ausführungsform ist das Drehgelenk exzentrisch zu einer geometrischen Mitte der Verbindungsanordnung angeordnet. Als geometrische Mitte ist der geometrische Schwerpunkt der Verbindungsanordnung zu verstehen, der von einem Massenschwerpunkt der Verbindungsanordnung abweichen kann. Die exzentrische Anordnung bietet die Möglichkeit, dass ein weiter von der Drehachse entfernter Abschnitt der Verbindungsanordnung bei einer Drehung um die Drehachse einen größeren Bewegungsumfang aufweist, als ein Abschnitt, welcher eine geringere Entfernung zu der Drehachse aufweist. Wird also dieser Abschnitt mit geringerer Entfernung und einem damit geringeren Bewegungsumfang benachbart zu dem Sozius angeordnet, so kann eine möglicherweise störende Beeinträchtigung des Sozius entsprechend reduziert und dennoch eine Pendelneigung des Fahrzeugs deutlich reduziert werden.

Des Weiteren umfasst die Verbindungsanordnung mindestens einen Führungsfortsatz, welcher jeweils in oder an einem Führungsabschnitt zur Führung einer Drehbewegung geführt wird. Mit Hilfe des einen oder der mehreren Führungsfortsätze kann somit die Drehbeweglichkeit der beiden Verbindungsabschnitte zueinander geführt und stabilisiert werden, sodass eine Festigkeit der Verbindungsanordnung verbessert wird, insbesondere in einem verbauten Zustand mit beladenem Topcase. Beispielsweise kann der jeweils zugeordnete Führungsabschnitt als Nut oder als (bogenförmig gekrümmtes) Langloch ausgeführt sein.

So kann der mindestens eine Führungsfortsatz fest mit dem ersten Verbindungsabschnitt verbunden und der jeweils zugehörige Führungsabschnitt dem zweiten Verbindungsabschnitt zugeordnet sein. Alternativ kann der mindestens eine Führungsfortsatz fest mit dem zweiten Verbindungsabschnitt verbunden und der jeweils zugehörige Führungsabschnitt dem ersten Verbindungsabschnitt zugeordnet sein.

Des Weiteren kann die Verbindungsanordnung mindestens einen Anschlag zum Begrenzen eines Umfangs der Drehbewegung umfassen, insbesondere einen als elastisches Dämpferelement ausgebildeten Anschlag. Optional kann der Anschlag zusätzlich einstellbar ausgebildet sein. Als Material für das elastische Dämpferelement ist beispielsweise ein Gummimaterial oder elastisch verformbarer Kunststoff geeignet.

In jedem Fall bietet der Anschlag die Möglichkeit den Umfang der Drehbewegung exakt zu definieren und somit eine schwingungsreduzierende Wirkung der gesamten Verbindungsanordnung abzustimmen.

Des Weiteren wird ein Motorrad oder motorradähnliches Fahrzeug bereitgestellt, mit einem Topcase, wobei das Topcase mit einer Verbindungsanordnung mit dem Motorrad oder motorradähnlichen Fahrzeug verbunden und die Verbindungsanordnung gemäß dieser Beschreibung ausgebildet ist. Als motorradähnliches Fahrzeug sind insbesondere alle Einspurfahrzeuge aber auch Mehrspurfahrzeuge jeweils mit entsprechender, sattelförmiger Sitzbank für den Nutzer zu verstehen, besonders bevorzugt zweirädrige, dreirädrige oder vierrädrige Motorroller beziehungsweise Scooter, aber auch Trikes und Quads.

In dem am Motorrad oder motorradähnlichen Fahrzeug verbauten Zustand kann die Verbindungsanordnung in einer Ebene parallel zu einer Unterseite des Topcase erstreckt ausgebildet beziehungsweise angeordnet sein. Auf diese Weise ist eine Beweglichkeit des Topcase in einer Ebene parallel zum Untergrund des Fahrzeugs sichergestellt.

Vorzugsweise ist die Drehachse in einer Fahrzeughöhenrichtung ausgerichtet, so dass die Drehachse senkrecht zu der Topcase Unterseite steht.

Ebenfalls vorzugsweise ist die Drehachse in einer Fahrzeugbreitenrichtung mittig zum Topcase angeordnet. Dies bedeutet, dass die Drehachse in Fahrzeuglängsrichtung hinter dem Sozius angeordnet ist, so dass eine Wahrnehmung aber auch eine Behinderung der Drehbewegung durch den Sozius minimiert wird.

Gemäß einer weiteren Ausführungsform ist die Drehachse in der Fahrzeuglängsrichtung zwischen einer in Fahrtrichtung weisenden Vorderseite des Topcase und einem Massen-Schwerpunkt des Topcase angeordnet.

Dies bedeutet, dass die Drehachse (bezüglich der Fahrzeuglängsrichtung) exzentrisch zu dem Topcase angeordnet ist, so dass sich die gleiche Wirkung einstellt, die bereits zu der exzentrischen Anordnung mit Bezug auf die gesamte Verbindungsanordnung beschrieben wurde. Mit anderen Worten dargestellt hat die exzentrische Anordnung im verbauten Zustand die Wirkung, dass die dem Sozius zugewandte Vorderseite des Topcase im Rahmen einer Drehbewegung einen geringeren Bewegungsumfang aufweist, als eine der Vorderseite entgegengesetzte Rückseite. Auf diese Weise wird die Wahrnehmung aber auch die Behinderung der Drehbewegung durch den Sozius zusätzlich minimiert und gleichzeitig eine möglichst hohe schwingungsdämpfende Wirkung sichergestellt sowie die Pendelneigung des Fahrzeugs reduziert.

Beispielsweise kann ein Abstand der Drehachse zur Vorderseite des Topcase weniger als 1/2, vorzugsweise weniger als 1/3, einer in der Fahrzeuglängsrichtung ausgerichteten Gesamtlänge des Topcase entsprechen. Mit anderen Worten dargestellt, ist die Drehachse also in der vorderen Hälfte, vorzugsweise im vorderen Drittel der in Fahrzeuglängsrichtung erstreckten Gesamtlänge des Topcase angeordnet, um eine möglichst optimale exzentrische Anordnung zu erzielen.

In beiden Fällen liegt der erzielte Drehpunkt bezüglich der Fahrzeuglängsrichtung in einem vorderen Bereich des Topcase, damit sich das Topcase über seinen Massenschwerpunkt drehen und somit in der Fahrzeugbreitenrichtung bewegen kann, um die schwingungsdämpfende Wirkung bereitzustellen und somit die Pendelneigung des gesamten Fahrzeugs zu reduzieren.

Aufgrund des durch die definierte Drehachse bereitgestellten fixen Verbindungspunkts beziehungsweise Lagerpunkts zwischen Topcase und Motorrad oder motorradähnlichem Fahrzeug ist sowohl eine möglichst spielfreie Befestigung konstruktiv einfach darstellbar als auch eine Auswirkung auf den Sozius aufgrund der Bewegung des Topcase reduziert.

Die Erfindung wird nachfolgend anhand einer Ausführungsform unter Bezugnahme auf die Figuren näher erläutert. Es zeigen:
- Fig. 1: eine perspektivische Ansicht eine Unterseite eines Topcase gemäß der Beschreibung, und
- Fig. 2: eine auf die Unterseite des Topcase aus Fig. 1 gerichtete Draufsicht.

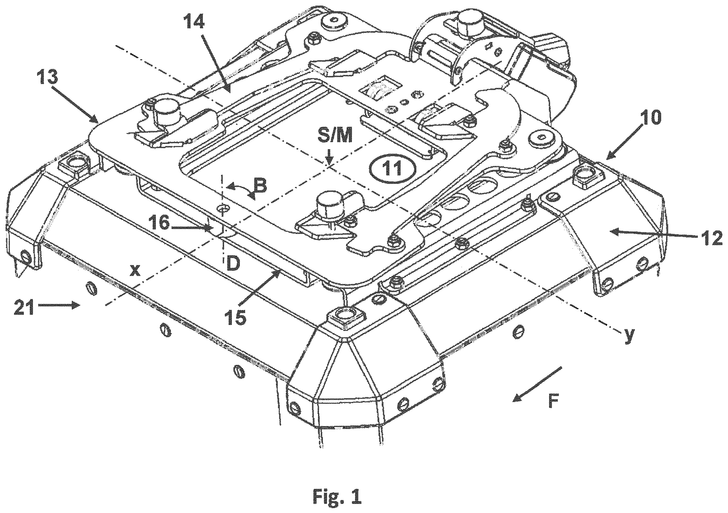

In Fig. 1 ist in perspektivischer Ansicht eine Unterseite 11 eines Topcase 10 für ein ein Motorrad oder ein motorradähnliches Fahrzeug, dargestellt. Das Topcase 10 umfasst einen Volumenkörper 12 zur Aufnahme von Gepäck sowie eine Verbindungsanordnung 13. Diese 13 ist an einer die Unterseite 11 definierenden Außenwandung des Volumenkörpers 12 angeordnet und zum Befestigen des Topcase 10 an dem Fahrzeug vorgesehen. Hierzu umfasst die Verbindungsanordnung 13 einen mit dem Kraftfahrzeug verbindbaren ersten Verbindungsabschnitt 14 und einen mit der Unterseite 11 des Topcase 10 verbundenen, zweiten Verbindungsabschnitt 15. Der erste 14 und der zweite Verbindungsabschnitt 15 sind um eine definierte Drehachse D drehbeweglich miteinander verbunden. Hierzu umfasst die Verbindungsanordnung 13 ein Drehgelenk 16 zum Bereitstellen der drehbeweglichen Verbindung (Drehbewegung B).

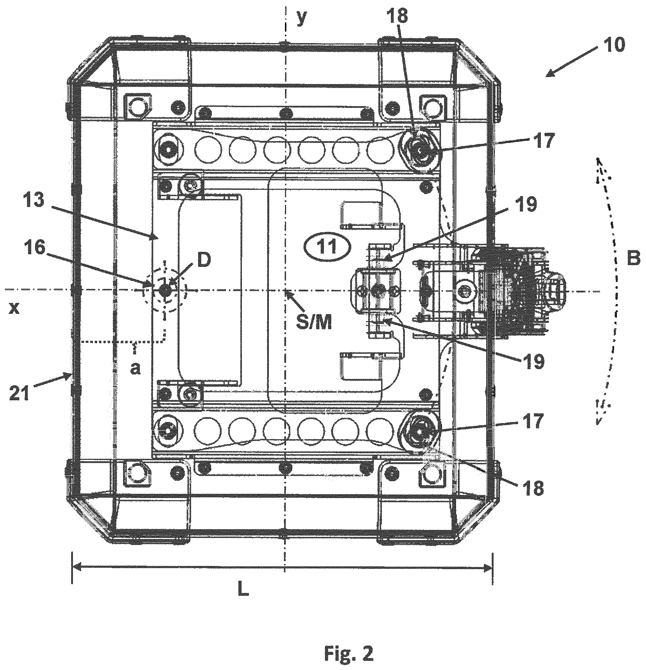

Wie in Fig. 1 dargestellt, ist die Verbindungsanordnung 13 in einer Ebene parallel zu der Unterseite 11, also dem Boden des Topcase 10 erstreckt. Dabei ist die Drehachse D senkrecht zu der Unterseite 11 (und damit im verbauten Zustand am Fahrzeug in einer Fahrzeughöhenrichtung) ausgerichtet. Gemäß Fig. 2 ist die Drehachse D in einer Fahrzeugbreitenrichtung y mittig zum Topcase 10 angeordnet. Außerdem ist die Drehachse D bezüglich einer Fahrzeuglängsrichtung x zwischen einer in Fahrtrichtung F weisenden Vorderseite 21 des Topcase 10 und einem Massen-Schwerpunkt M des Topcase 10 angeordnet.

Wie in Fig. 1 und in der auf die Unterseite 11 des Topcase 10 gerichteten Draufsicht dargestellt, ist das Drehgelenk 16 exzentrisch zu einer geometrischen Mitte S beziehungsweise zu einem geometrischen Schwerpunkt S der Verbindungsanordnung 13 angeordnet. Bevorzugt entspricht ein Abstand a der Drehachse D zur Vorderseite 21 des Topcase 10 weniger als 1/2, vorzugsweise weniger als 1/3, einer in der Fahrzeuglängsrichtung x ausgerichteten Gesamtlänge L des Topcase 10. Der geometrische Schwerpunkt S muss dabei nicht zwingend mit dem Massen-Schwerpunkt M des Top-Case 10 (in der Draufsicht von Fig. 2) oder einem Massen-Schwerpunkt (nicht dargestellt) der Verbindungsanordnung 13 zusammenfallen.

Des Weiteren umfasst die Verbindungsanordnung 13 zwei Führungsfortsätze 17, welche jeweils in einem Führungsabschnitt 18 zur Führung der Drehbewegung B geführt werden. Diese 17,18 sind beabstandet zu der Drehachse D an entfernten Enden der Verbindungsanordnung 13 angeordnet, um einen Abstand zur Drehachse D möglichst groß zu halten und damit eine optimale und stabile Führungswirkung und Dämpfungswirkung zu erzielen und die Pendelneigung zu reduzieren.

Wie dargestellt, sind die beiden Führungsfortsätze 17 fest mit dem zweiten Verbindungsabschnitt 15 verbunden und die beiden Führungsabschnitte 18 dem ersten Verbindungsabschnitt 14 zugeordnet. Alternativ und daher nicht dargestellt, können die beiden Führungsfortsätze 17 aber auch mit dem ersten Verbindungsabschnitt 14 verbunden und die Führungsabschnitte 18 dem zweiten Verbindungsabschnitt 15 zugeordnet sein.

Des Weiteren weist die Verbindungsanordnung 13 zwei Anschläge 19 zum Begrenzen eines Bewegungsumfangs der Drehbewegung B auf, die beispielsweise jeweils als elastisches Dämpferelement ausgebildet sein können.

## Patentansprüche

1. Verbindungsanordnung (13) zur Befestigung eines Topcase (10) an einem einem Motorrad oder einem motorradähnlichen Fahrzeug, mit:
- einem ersten Verbindungsabschnitt (14), der zum Verbinden mit dem Motorrad oder motorradähnlichen Fahrzeug ausgebildet ist, und
- einem zweiten Verbindungsabschnitt (15), der zum Verbinden mit einer Unterseite (11) des Topcase (10) ausgebildet ist,
wobei der erste (14) und der zweite Verbindungsabschnitt (15) um eine definierte Drehachse (D) drehbeweglich miteinander verbunden sind,
wobei die Verbindungsanordnung (13) ein Drehgelenk (16) zum Bereitstellen der drehbeweglichen Verbindung umfasst und das Drehgelenk (16) die Drehachse definiert und einerseits mit dem ersten Verbindungsabschnitt (14) und andererseits mit dem zweiten Verbindungsabschnitt (15) verbunden ist, **dadurch gekennzeichnet, dass** die Verbindungsanordnung (13) des Weiteren mindestens einen Führungsfortsatz (17) umfasst, welcher jeweils in oder an einem Führungsabschnitt (18) zur Führung der Drehbewegung (D) geführt wird.

2. Verbindungsanordnung nach Anspruch 1, **dadurch gekennzeichnet, dass** das Drehgelenk (16) exzentrisch zu einem geometrischen Schwerpunkt (S) der Verbindungsanordnung (13) angeordnet ist.

3. Verbindungsanordnung nach mindestens einem der Ansprüche 1 bis 2, **dadurch gekennzeichnet, dass** der mindestens eine Führungsfortsatz (17) fest mit dem ersten Verbindungsabschnitt (14) verbunden und der Führungsabschnitt (18) dem zweiten Verbindungsabschnitt (15) zugeordnet ist, oder dass der mindestens eine Führungsfortsatz (17) fest mit dem zweiten Verbindungsabschnitt (15) verbunden und der Führungsabschnitt (18) dem ersten Verbindungsabschnitt (14) zugeordnet ist,

4. Verbindungsanordnung nach mindestens einem der Ansprüche 1 bis 3, **dadurch gekennzeichnet, dass** die Verbindungsanordnung (13) mindestens einen Anschlag (19) zum Begrenzen eines Umfangs der Drehbewegung (B) umfasst, insbesondere einen als elastisches Dämpferelement ausgebildeten Anschlag.

5. Verbindungsanordnung nach mindestens einem der Ansprüche 1 bis 4, **dadurch gekennzeichnet, dass** die Verbindungsanordnung (13) zwei Führungsfortsätze (17) umfasst, welche jeweils in oder an einem Führungsabschnitt (18) zur Führung der Drehbewegung (D) geführt werden, wobei die zwei Führungsfortsätze (17) beabstandet zu der Drehachse (D) an entfernten Enden der Verbindungsanordnung (13) angeordnet sind.

6. Motorrad oder motorradähnliches Fahrzeug, mit einem Topcase (10), wobei das Topcase (10) mit einer Verbindungsanordnung (13) mit dem Motorrad oder motorradähnlichen Fahrzeug verbunden ist, **dadurch gekennzeichnet, dass** die Verbindungsanordnung (13) nach einem der Ansprüche 1 bis 5 ausgebildet ist.

7. Motorrad oder motorradähnliches Fahrzeug nach Anspruch 6, **dadurch gekennzeichnet, dass** die Verbindungsanordnung (13) in einer Ebene parallel zu der Unterseite (11) des Topcase (10) erstreckt ausgebildet ist.

8. Motorrad oder motorradähnliches Fahrzeug nach Anspruch 6 oder 7, **dadurch gekennzeichnet, dass** die Drehachse (D) senkrecht zu der Topcase Unterseite (11) ausgerichtet ist.

9. Motorrad oder motorradähnliches Fahrzeug nach mindestens einem der Ansprüche 6 bis 8, **dadurch gekennzeichnet, dass** die Drehachse (D) in einer Fahrzeugbreitenrichtung (y) mittig zum Topcase (10) angeordnet ist.

10. Motorrad oder motorradähnliches Kraftfahrzeug nach mindestens einem der Ansprüche 6 bis 9, **dadurch gekennzeichnet, dass** die Drehachse (D) in einer Fahrzeuglängsrichtung (x) zwischen einer in Fahrtrichtung (F) weisenden Vorderseite (21) des Topcase (10) und einem Massen-Schwerpunkt (M) des Top-case (10) angeordnet ist.

11. Motorrad oder motorradähnliches Fahrzeug nach Anspruch 10, **dadurch gekennzeichnet, dass** ein Abstand (a) der Drehachse (D) zur Vorderseite (21) des Topcase (10) weniger als 1/2, vorzugsweise weniger als 1/3, einer in der Fahrzeuglängsrichtung (x) gerichteten Gesamtlänge (L) des Topcase (10) entspricht.

## Claims

1. Connecting assembly (13) for fastening a top case (10) to a motorcycle or a motorcycle-like vehicle, having:
- a first connecting section (14) which is configured for connecting to the motorcycle or motorcycle-like vehicle, and
- a second connecting section (15) which is configured for connecting to an underside (11) of the top case (10),
wherein the first (14) and the second connecting section (15) are connected to one another such that they can be moved rotationally about a defined rotational axis (D),
wherein the connecting assembly (13) comprises a rotary joint (16) for providing the rotationally movable connection, and the rotary joint (16) defines the rotational axis and is connected firstly to the first connecting section (14) and secondly to the second connecting section (15), **characterized in that** the connecting assembly (13) furthermore comprises at least one guide projection (17) which is guided in each case in or on a guide section (18) for guiding the rotational movement (D).

2. Connecting assembly according to Claim 1, **characterized in that** the rotary joint (16) is arranged eccentrically with respect to a geometric centroid (S) of the connecting assembly (13).

3. Connecting assembly according to at least one of Claims 1 to 2, **characterized in that** the at least one guide projection (17) is connected fixedly to the first connecting section (14) and the guide section (18) is assigned to the second connecting section (15), or **in that** the at least one guide projection (17) is connected fixedly to the second connecting section (15) and the guide section (18) is assigned to the first connecting section (14).

4. Connecting assembly according to at least one of Claims 1 to 3, **characterized in that** the connecting assembly (13) comprises at least one stop (19) for limiting an extent of the rotational movement (B), in particular a stop which is configured as an elastic damper element.

5. Connecting assembly according to at least one of Claims 1 to 4, **characterized in that** the connecting assembly (13) comprises two guide projections (17) which are guided in each case in or on a guide section (18) for guiding the rotational movement (D), wherein the two guide projections (17) are arranged spaced apart from the rotational axis (D) at remote ends of the connecting assembly (13).

6. Motorcycle or motorcycle-like vehicle, having a top case (10), wherein the top case (10) is connected to the motorcycle or motorcycle-like vehicle by way of a connecting assembly (13), **characterized in that** the connecting assembly (13) is configured according to one of Claims 1 to 5.

7. Motorcycle or motorcycle-like vehicle according to Claim 6, **characterized in that** the connecting assembly (13) is configured so as to extend in a plane parallel to the underside (11) of the top case (10) .

8. Motorcycle or motorcycle-like vehicle according to Claim 6 or 7, **characterized in that** the rotational axis (D) is oriented perpendicularly with respect to the top case underside (11).

9. Motorcycle or motorcycle-like vehicle according to at least one of Claims 6 to 8, **characterized in that** the rotational axis (D) is arranged centrally with respect to the top case (10) in a vehicle width direction (y).

10. Motorcycle or motorcycle-like vehicle according to at least one of Claims 6 to 9, **characterized in that** the rotational axis (D) is arranged in a vehicle longitudinal direction (x) between a front side (21) of the top case (10), which front side (21) points in the driving direction (F), and a center of mass (M) of the top case (10).

11. Motorcycle or motorcycle-like vehicle according to Claim 10, **characterized in that** a spacing (a) of the rotational axis (D) from the front side (21) of the top case (10) corresponds to less than half, preferably less than one third, of an overall length (L) of the top case (10), which overall length (L) is directed in the vehicle longitudinal direction (x) .

## Revendications

1. Dispositif de connexion (13) servant à la fixation d'un top case (10) à une motocyclette ou à un véhicule similaire à une motocyclette, comportant :
- une première partie de connexion (14) qui est réalisée pour être connectée à la motocyclette ou au véhicule similaire à une motocyclette, et
- une deuxième partie de connexion (15) qui est réalisée pour être connectée à un côté inférieur (11) du top case (10),
la première (14) et la deuxième partie de connexion (15) étant reliées l'une à l'autre de manière mobile en rotation autour d'un axe de rotation (D) défini,
le dispositif de connexion (13) comportant une articulation rotative (16) pour la réalisation de la connexion mobile en rotation et l'articulation rotative (16) définissant l'axe de rotation et étant connectée d'une part à la première partie de connexion (14) et d'autre part à la deuxième partie de connexion (15), **caractérisé en ce que** le dispositif de connexion (13) comporte en outre au moins une saillie de guidage (17), laquelle est guidée respectivement dans ou sur une partie de guidage (18) servant au guidage du mouvement de rotation (D).

2. Dispositif de connexion selon la revendication 1, **caractérisé en ce que** l'articulation rotative (16) est disposée de manière excentrique par rapport à un barycentre géométrique (S) du dispositif de connexion (13) .

3. Dispositif de connexion selon au moins l'une des revendications 1 et 2, **caractérisé en ce que** l'au moins une saillie de guidage (17) est connectée solidement à la première partie de connexion (14) et la partie de guidage (18) est associée à la deuxième partie de connexion (15), ou **en ce que** l'au moins une saillie de guidage (17) est connectée solidement à la deuxième partie de connexion (15) et la partie de guidage (18) est associée à la deuxième première de connexion (14).

4. Dispositif de connexion selon au moins l'une des revendications 1 à 3, **caractérisé en ce que** le dispositif de connexion (13) comporte au moins une butée (19) servant à la limitation d'une périphérie du mouvement de rotation (B), en particulier une butée réalisée sous forme d'élément amortisseur élastique.

5. Dispositif de connexion selon au moins l'une des revendications 1 à 4, **caractérisé en ce que** le dispositif de connexion (13) comporte deux saillies de guidage (17), lesquelles sont guidées respectivement dans ou sur une partie de guidage (18) servant au guidage du mouvement de rotation (D), les deux saillies de guidage (17) étant disposées de manière espacée de l'axe de rotation (D) à des extrémités éloignées du dispositif de connexion (13).

6. Motocyclette ou véhicule similaire à une motocyclette, comportant un top case (10), le top case (10) étant connecté à la motocyclette ou au véhicule similaire à une motocyclette à l'aide d'un dispositif de connexion (13), **caractérisé en ce que** le dispositif de connexion (13) est réalisé selon l'une des revendications 1 à 5.

7. Motocyclette ou véhicule similaire à une motocyclette selon la revendication 6, caractérisé(e) en ce que le dispositif de connexion (13) est réalisé de manière à s'étendre dans un plan parallèle au côté inférieur (11) du top case (10).

8. Motocyclette ou véhicule similaire à une motocyclette selon la revendication 6 ou 7, caractérisé(e) en ce que l'axe de rotation (D) est orienté perpendiculairement au côté inférieur (11) du top case.

9. Motocyclette ou véhicule similaire à une motocyclette selon au moins l'une des revendications 6 à 8, caractérisé(e) en ce que l'axe de rotation (D) est disposé centralement par rapport au top case (10) dans une direction de la largeur du véhicule (y).

10. Motocyclette ou véhicule similaire à une motocyclette selon au moins l'une des revendications 6 à 9, caractérisé (e) en ce que l'axe de rotation (D) est disposé entre un côté avant (21) du top case (10) orienté dans la direction de conduite (F) et un centre de masse (M) du top case (10) dans une direction longitudinale du véhicule (x).

11. Motocyclette ou véhicule similaire à une motocyclette selon la revendication 10, caractérisé(e) en ce qu'une distance (a) de l'axe de rotation (D) au côté avant (21) du top case (10) correspond à moins de 1/2, de préférence à moins de 1/3, d'une longueur totale (L) du top case (10) orientée dans la direction longitudinale du véhicule (x).
